# EUROPÄISCHE PATENTSCHRIFT

(11) **EP 2 757 018 B1**
(45) Veröffentlichungstag und Bekanntmachung des Hinweises auf die Patenterteilung: **24.04.2019**
(21) Anmeldenummer: 14151453.9
(22) Anmeldetag: 16.01.2014
(51) Int. Cl.: B61L 5/18, B61L 1/20

(54) **Überwachung einer elektrischen Komponente**
Monitoring of an electrical component
Surveillance d'un composant électrique

(30) Priorität: 22.01.2013 AT 500392013
(43) Veröffentlichungstag der Anmeldung: 23.07.2014
(73) Patentinhaber: Siemens AG Österreich, 1210 Wien (AT)
(72) Erfinder: Alphart, Johann, 2514 Traiskirchen (AT)
(74) Vertreter: Maier, Daniel Oliver

(56) Entgegenhaltungen:
- EP-A2- 0 763 877
- WO-A1-95/12512
- GB-A- 2 150 373
- JP-A- 2007 083 932
- US-A1- 2006 259 202
- US-B2- 6 956 494

## Beschreibung

### Technisches Gebiet

Die Erfindung betrifft ein Verfahren zur Überwachung einer elektrischen Komponente, wobei die elektrische Komponente eine Fehlermeldeeinrichtung umfasst, und mittels eines über Speiseleitungen gespeisten Schaltnetzteils betrieben wird.

Weiter umfasst die Erfindung eine Schaltungsanordnung zur Durchführung des erfindungsgemäßen Verfahrens.

### Stand der Technik

Elektrische Komponenten, insbesondere wenn es sich dabei um sicherheitsrelevante elektrische Komponenten wie beispielsweise optische Signalanlagen im Schienen- oder Straßenverkehr handelt, müssen ständig oder zumindest zyklisch auf ihren ordnungsgemäßen Betrieb geprüft werden. Solche elektrische Komponenten sind oftmals dezentral innerhalb eines weit verzweigten Netzwerkes angeordnet und werden mittels einer Transformator-Gleichrichter-Kombination mit Gleichspannung betrieben. Zwischen den elektrischen Komponenten befinden sich oftmals große räumliche Abstände. Es besteht die Möglichkeit, solche Komponenten vor Ort manuell auf ihren ordnungsgemäßen Betrieb zu prüfen, und im Fehlerfall oder auch präventiv auszutauschen. Dies ist auf Grund des dazu notwendigen Betriebspersonals aufwändig, teuer und ineffizient. Eine aus dem Stand der Technik bekannte Lösung dieses Problems besteht darin, die elektrischen Komponenten an einer zentralen Stelle auf ihren ordnungsgemäßen Betrieb zu prüfen beziehungsweise ständig zu überwachen. Dazu ist jedoch für jede elektrische Komponente zusätzlich zu den Versorgungsleitungen für die elektrische Komponente eine Sonderverkabelung zur Übertragung eines Fehlersignals oder Störsignals in die zentrale Stelle notwendig. Dazu ist bei bereits bestehenden Anlagen mit elektrischen Komponenten eine Nachverkabelung, bei Neuanlagen eine Sonderverkabelung erforderlich. Beides ist aufwändig und teuer.

Die US 2006/259202 A1 offenbart eine Überwachung einer Signalleuchte mittels Zweidrahtleitung, bei der im Fehlerfall ein Widerstand zwischen die beiden Adern geschaltet wird, so dass am anderen Ende der Leitung der geänderte Widerstand der Schaltung erkannt werden kann.

### Zusammenfassung der Erfindung

### Technische Aufgabe

Der Erfindung liegt die Aufgabe zugrunde, ein Verfahren und eine Schaltungsanordnung zur Überwachung einer elektrischen Komponente anzugeben, bei der im Fehlerfall oder Störfall der elektrischen Komponente ein Fehlersignal mittels der Versorgungsleitungen der elektrischen Komponente in eine zentrale Stelle übertragen wird.

### Technische Lösung

Die Aufgabe wird durch ein Verfahren zur Überwachung einer elektrischen Komponente gelöst, wobei die elektrische Komponente eine Fehlermeldeeinrichtung umfasst und mittels eines über Versorgungsleitungen gespeisten Schaltnetzteils betrieben wird, und wobei erfindungsgemäß ein in einer der Versorgungsleitungen angeordnetes Gleichrichterelement während des ordnungsgemäßen Betriebes der elektrischen Komponente mittels eines von der Fehlermeldeeinrichtung betätigten Schalters überbrückt wird und wobei im Fehlerfall oder Störfall die Funktion des Gleichrichtelementes durch eine in der Versorgungsleitung angeordnete Detektionseinrichtung erkannt wird.

Bei ordnungsgemäßem Betrieb der elektrischen Komponente wird das Gleichrichterelement vom Schalter elektrisch überbrückt. Das Gleichrichterelement in diesem Fall wirkungslos und hat daher auch keinen Einfluss auf die Stromform des in den Versorgungsleitungen fließenden elektrischen Stroms.

Im Fehlerfall oder Störfall der elektrischen Komponente wird der Schalter von der Fehlermeldeeinrichtung geöffnet wodurch die Funktion des Gleichrichterelements aktiviert wird. In diesem Fall bewirkt das Gleichrichterelement, abhängig von der Polung, die Unterdrückung von positiven beziehungsweise negativen Stromhalbwellen, mit einer damit verbundenen Änderung der Stromform in den Versorgungsleitungen. Die Änderung der Stromform wird von der in der Versorgungsleitung angeordneten Detektionseinrichtung erkannt.

Im Fehlerfall oder Störfall stehen nur mehr positive oder nur mehr negative Stromhalbwellen zur Speisung des Schaltnetzteils zur Verfügung. Ist das Schaltnetzteil entsprechend überdimensioniert, so führt dies zu keiner Beeinträchtigung des Betriebs der elektrischen Komponente.

Das erfindungsgemäße Verfahren hat den Vorteil, dass im Fehlerfall oder Störfall der elektrischen Komponente ein Fehlersignal ausschließlich mittels der Versorgungsleitungen übertragen wird. Es ist dazu keine zusätzliche Sonderverkabelung notwendig. Ein weiterer Vorteil ergibt sich durch die einfache Nachrüstbarkeit bereits bestehender Anlagen mit elektrischen Komponenten. Dazu wird lediglich eine vorhanden Transformator-Gleichrichter-Kombination gegen ein Schaltnetzteil ausgetauscht und ein Gleichrichterelement sowie eine Detektionseinrichtung in eine der Versorgungsleitungen eingebaut.

Damit können elektrische Komponenten, auch wenn diese dezentral in großen räumlichen Abständen zueinander angeordnet sind, an einer zentralen Stelle auf ihren ordnungsgemäßen Betrieb geprüft beziehungsweise überwacht werden.

Vorzugsweise ist die elektrische Komponente eine Signaleinrichtung innerhalb eines Eisenbahnnetzes, welche überwacht wird. Eine Signaleinrichtung ist beispielsweise eine Doppelfadenüberwachungseinrichtung, ein Isolationsprüfgerät für Lichtsignalstromkreise, ein elektronisches Weichenendlagenprüfsystem, eine dezentralisierte Hilfsstromversorgung oder auch eine Batterieüberwachung für solche Signaleinrichtungen.

Erfindungsgemäß werden solche Signaleinrichtungen auf ihren odnungsgemäßen Betrieb überwacht. Da es sich bei den Signaleinrichtungen meistens um Einrichtungen zur Reduzierung des Gefahrenpotentials für Personen und Sachen handelt, ist die erfindungsgemäße permanente Überwachung besonders wichtig.

Vorzugsweise ist als Gleichrichterelement eine Diode vorgesehen.

Die Detektionseinrichtung ist bevorzugt in einer zentralen Stellwerkanlage angeordnet. Dort erfolgt eine Auswertung der Stromhalbwellen in der Versorgungsleitung.

Der ordnungsgemäße Betrieb einer dezentral angeordneten elektrischen Komponente kann dadurch an einer zentralen Stelle überprüft werden, ohne zusätzliche Sonderverkabelung oder Nachverkabelung.

Die vom Schaltnetzteil erzeugte Ausgangsspannung, mittels der die elektrische Komponente betrieben wird, wird geregelt.

Damit können unterschiedliche elektrische Komponenten mit unterschiedlicher Leistungs- beziehungsweise Stromaufnahme mit dem Schaltnetzteil betrieben werden.

Das Schaltnetzteil wird mit einer Wechselspannung zwischen 100 Volt und 265 Volt gespeist.

Ein weiterer Gegenstand der Erfindung ist eine Schaltungsanordnung zur Durchführung des erfindungsgemäßen Verfahrens, wobei die Schaltungsanordnung umfasst:
- eine zu überwachende elektrische Komponente mit einer Fehlermeldeeinrichtung,
- ein Schaltnetzteil zum Betreiben der elektrischen Komponente mit in das Schaltnetzteil mündenden Versorgungsleitungen zum Einbringen von elektrischer Energie in das Schaltnetzteil,
wobei die Schaltungsanordnung weiter umfasst:
- ein in einer der Versorgungsleitungen angeordnetes Gleichrichterelement, welches während des ordnungsgemäßen Betriebes der elektrischen Komponente mittels eines von der Fehlermeldeeinrichtung betätigten Schalters überbrückt wird,
- eine in der Versorgungsleitung angeordnete Detektionseinrichtung, zur Erkennung der Funktion des Gleichrichtelementes im Fehlerfall der elektrischen Komponente.

Damit können elektrische Komponenten, auch wenn diese dezentral in großen räumlichen Abständen zueinander angeordnet sind, an einer zentralen Stelle auf ihren ordnungsgemäßen Betrieb geprüft beziehungsweise überwacht werden.

In einer bevorzugten Ausführungsform der ist die elektrische Komponente eine Signaleinrichtung innerhalb eines Eisenbahnnetzes.

Als Gleichrichterelement ist vorzugsweise eine Diode vorgesehen.

Die Detektionseinrichtung ist in einer weiteren bevorzugten Ausführungsform in einer zentralen Stellwerkanlage eines Eisenbahnnetzes angeordnet.

Der ordnungsgemäße Betrieb einer dezentral angeordneten elektrischen Komponente kann dadurch an einer zentralen Stelle überprüft werden, ohne zusätzliche Sonderverkabelung oder Nachverkabelung.

Wenn das Schaltnetzteil über eine regelbare Ausgangsspannung verfügt, können damit unterschiedliche elektrische Komponenten mit unterschiedlicher Leistungs- beziehungsweise Stromaufnahme mit dem Schaltnetzteil betrieben werden.

Das Schaltnetzteil ist für den Betrieb mit einer Wechselspannung zwischen 100 Volt und 265 Volt ausgelegt.

### Kurze Beschreibung der Zeichnungen

Es zeigen beispielhaft und schematisch
FIG 1 ein Verfahren und eine Schaltungsanordnung zur Überwachung einer elektrischen Komponente 1 nach dem Stand der Technik.
FIG 2 ein erfindungsgemäßes Verfahren und eine erfindungsgemäße Schaltungsanordnung zur Überwachung einer elektrischen Komponente 1.
FIG 3 die Stromform bei ordnungsgemäßen Betrieb 10 einer elektrischen Komponente 1 und im Fehlerfall 11 oder Störfall einer elektrischen Komponente 1.

### Beschreibung der Ausführungsformen

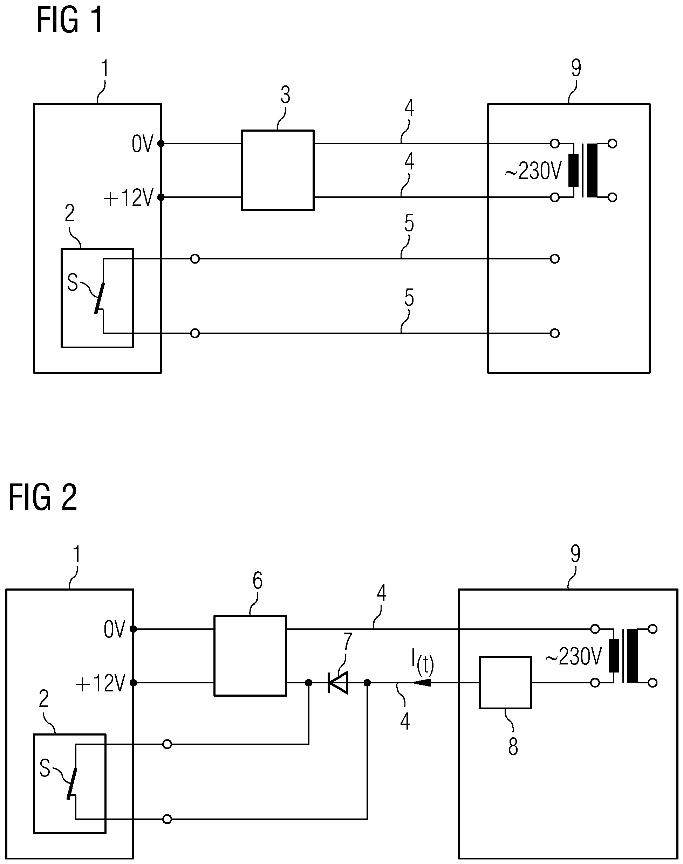

FIG 1 zeigt ein Verfahren und eine Schaltungsanordnung zur Überwachung einer elektrischen Komponente 1 nach dem Stand der Technik. Die elektrische Komponente 1 wird mittels einer Transformator-Gleichrichterkombination 3 mit einer Gleichspannung von 12 Volt betrieben. Die Transformator-Gleichrichterkombination 3 wird mittels der Versorgungsleitungen 4 mit einer Wechselspannung von 230 Volt gespeist. Die elektrische Komponente 1 umfasst eine Fehlermeldeeinrichtung 2, welche den Schalter S, je nach Betrieb der elektrischen Komponente 1 (ordnungsgemäßer Betrieb 10 oder Fehlerfall 11 beziehungsweise Störfall) von der Fehlermeldeeinrichtung 2 in eine Geschlossen oder Offen - Stellung gebracht wird. Die Stellung des Schalters S, welche am Ort der elektrischen Komponente 1 oder an einer zentralen Stellwerkanlage 9 mittels geeigneter Einrichtungen überprüft beziehungsweise überwacht wird, ist daher ein Indikator zur Bewertung des Betriebs der elektrischen Komponente 1. Zur Überprüfung des Betriebs der elektrischen Komponente 1 an der zentralen Stellwerkanlage 9 ist jedoch eine Sonderverkabelung 5 erforderlich. Ist die Sonderverkabelung 5 unerwünscht, kann der Betrieb der elektrischen Komponente 1 nur am Ort der elektrischen Komponente 1 überprüft werden.

FIG 2 zeigt ein erfindungsgemäßes Verfahren und eine erfindungsgemäße Schaltungsanordnung zur Überwachung einer elektrischen Komponente 1.

Die elektrische Komponente 1 wird mittels eines Schaltnetzteils 6 mit einer Gleichspannung von 12 Volt betrieben. Das Schaltnetzteil 6 wird mittels der Versorgungsleitungen 4 mit einer Wechselspannung von 230 Volt gespeist. Die elektrische Komponente 1 umfasst eine Fehlermeldeeinrichtung 2, welche den Schalter S, je nach Betrieb der elektrischen Komponente 1 (ordnungsgemäßer Betrieb 10 oder Fehlerfall 11 beziehungsweise Störfall) von der Fehlermeldeeinrichtung 2 in eine Geschlossen oder Offen - Stellung gebracht wird. Die Stellung des Schalters S ist daher ein Indikator zur Bewertung des Betriebs der elektrischen Komponente 1.

Während des ordnungsgemäßen Betriebs 10 der elektrischen Komponente 1, wird, wie in FIG 2 dargestellt, ein in einer Versorgungsleitung 4 angeordnetes Gleichrichterelement 7 mittels des von der Fehlermeldeeinrichtung 2 betätigten Schalters S überbrückt. Das Gleichrichterelement 7 ist in diesem Fall wirkungslos und hat daher auch keinen Einfluss auf die Stromform des in den Versorgungsleitungen 4 fließenden elektrischen Stroms I₍ₜ₎.

Im Fehlerfall 11 oder Störfall der elektrischen Komponente 1 wird die Funktion des Gleichrichterelements 7 durch eine in der Versorgungsleitung 4 angeordnete Detektionseinrichtung 8 erkannt. Dies erfolgt dadurch, dass die Funktion des Gleichrichterelements 7 im Fehlerfall 11 durch Öffnen des Schalters S aktiviert wird. In diesem Fall bewirkt das Gleichrichterelement 7, abhängig von der Polung, die Unterdrückung von positiven beziehungsweise negativen Stromhalbwellen, mit einer damit verbundenen Änderung der Stromform in den Versorgungsleitungen 4. Die Änderung der Stromform wird von der in der Versorgungsleitung angeordneten Detektionseinrichtung 8 erkannt. Die Detektionseinrichtung 8 ist in einer zentralen Stellwerkanlage 9 angeordnet.

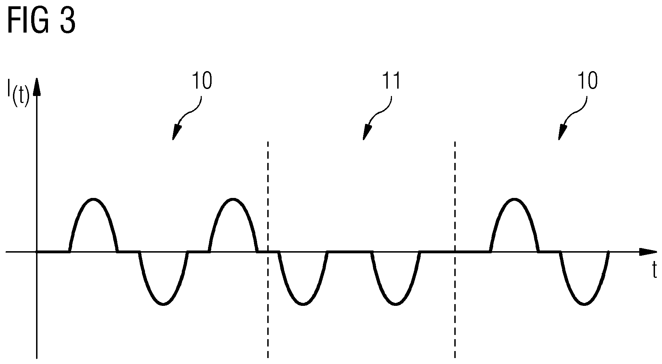

FIG 3 zeigt den zeitlichen Verlauf des Stroms I₍ₜ₎ bei ordnungsgemäßen Betrieb 10 einer elektrischen Komponente 1 und im Fehlerfall 11 oder Störfall einer elektrischen Komponente 1.

Während des ordnungsgemäßen Betriebs 10 der elektrischen Komponente 1 weist der Strom I₍ₜ₎ positive und negative Halbwellen auf. Im Fehlerfall 11 oder Störfall der elektrischen Komponente 1 weist der Strom I₍ₜ₎ nur negative Halbwellen auf.

Das erfindungsgemäße Verfahren hat den Vorteil, dass im Fehlerfall 11 oder Störfall der elektrischen Komponente ein Fehlersignal ausschließlich mittels der Versorgungsleitungen 4 übertragen wird. Es ist dazu keine zusätzliche Sonderverkabelung 5 notwendig. Ein weiterer Vorteil ergibt sich durch die einfache Nachrüstbarkeit bereits bestehender Anlagen mit elektrischen Komponenten 1. Dazu wird lediglich eine vorhanden Transformator-Gleichrichter-Kombination 3 gegen ein Schaltnetzteil 6 ausgetauscht und ein Gleichrichterelement 7 sowie eine Detektionseinrichtung 8 in eine der Versorgungsleitungen 4 eingebaut.

Damit können elektrische Komponenten 1, auch wenn diese dezentral in großen räumlichen Abständen zueinander angeordnet sind, an einer zentralen Stelle auf ihren ordnungsgemäßen Betrieb geprüft beziehungsweise überwacht werden.

Die erfindungsgemäße Lösung ist nicht auf die dargestellten Beispiele beschränkt, es sind auch andere Ausführungen denkbar.

### Liste der Bezugszeichen

- 1: elektrische Komponente
- 2: Fehlermeldeeinrichtung
- 3: Transformator-Gleichrichter-Kombination
- 4: Versorgungsleitung
- 5: Sonderverkabelung
- 6: Schaltnetzteil
- 7: Gleichrichterelement
- 8: Detektionseinrichtung
- 9: zentrale Stellwerkanlage
- 10: ordnungsgemäßer Betrieb
- 11: Fehlerfall
- S: Schalter
- t: Zeit
- I₍ₜ₎: Strom

## Patentansprüche

1. Verfahren zur Überwachung einer elektrischen Komponente (1), wobei die elektrische Komponente (1) eine Fehlermeldeeinrichtung (2) umfasst und mittels eines über Versorgungsleitungen (4) gespeisten Schaltnetzteils (6) betrieben wird, **dadurch gekennzeichnet, dass** ein in einer der Versorgungsleitungen (4) angeordnetes Gleichrichterelement (7) während des ordnungsgemäßen Betriebes der elektrischen Komponente (1) mittels eines von der Fehlermeldeeinrichtung (2) betätigten Schalters S überbrückt wird, und dass im Fehlerfall oder Störfall die Funktion des Gleichrichtelementes (7) durch eine in der Versorgungsleitung (4) angeordnete Detektionseinrichtung (8) erkannt wird.

2. Verfahren nach Anspruch 1, **dadurch gekennzeichnet, dass** die elektrische Komponente (1) eine Signaleinrichtung innerhalb eines Eisenbahnnetzes ist und überwacht wird.

3. Verfahren nach einem der Ansprüche 1 oder 2, **dadurch gekennzeichnet, dass** als Gleichrichterelement (7) eine Diode vorgesehen ist.

4. Verfahren nach einem der Ansprüche 1 bis 3, **dadurch gekennzeichnet, dass** mittels der Detektionseinrichtung (8), welche in einer zentralen Stellwerkanlage (9) angeordnet ist, eine Auswertung von Stromhalbwellen in der Versorgungsleitung erfolgt.

5. Verfahren nach einem der Ansprüche 1 bis 4, **dadurch gekennzeichnet, dass** eine vom Schaltnetzteil (6) erzeugte Ausgangsspannung, mittels der die elektrische Komponente (1) betrieben wird, geregelt wird.

6. Verfahren nach einem der Ansprüche 1 bis 5, **dadurch gekennzeichnet, dass** das Schaltnetzteil (6) mit einer Wechselspannung zwischen 100 Volt und 265 Volt gespeist wird.

7. Schaltungsanordnung zur Durchführung des Verfahrens nach einem der Ansprüche 1 bis 6, umfassend:
- eine zu überwachende elektrische Komponente (1) mit einer Fehlermeldeeinrichtung (2),
- ein Schaltnetzteil (6) zum Betreiben der elektrischen Komponente (1) mit in das Schaltnetzteil (6) mündenden Versorgungsleitungen (4) zum Einbringen von elektrischer Energie in das Schaltnetzteil (6),
**dadurch gekennzeichnet, dass** die Schaltungsanordnung weiter umfasst:
- ein in einer der Versorgungsleitungen (4) angeordnetes Gleichrichterelement (7), welches während des ordnungsgemäßen Betriebes der elektrischen Komponente (1) mittels eines von der Fehlermeldeeinrichtung (2) betätigten Schalters überbrückt wird,
- eine in der Versorgungsleitung (4) angeordnete Detektionseinrichtung (8), zur Erkennung der Funktion des Gleichrichtelementes (7) im Fehlerfall der elektrischen Komponente (1).

8. Schaltungsanordnung nach Anspruch 7, **dadurch gekennzeichnet, dass** die elektrische Komponente (1) eine Signaleinrichtung innerhalb eines Eisenbahnnetzes ist.

9. Schaltungsanordnung nach einem der Ansprüche 7 oder 8, **dadurch gekennzeichnet, dass** als Gleichrichterelement (7) eine Diode vorgesehen ist.

10. Schaltungsanordnung nach einem der Ansprüche 7 bis 9, **dadurch gekennzeichnet, dass** die Detektionseinrichtung (8) in einer zentralen Stellwerkanlage (9) eines Eisenbahnnetzes angeordnet ist.

11. Schaltungsanordnung nach einem der Ansprüche 7 bis 10, **dadurch gekennzeichnet, dass** das Schaltnetzteil (6) über eine regelbare Ausgangsspannung verfügt.

12. Schaltungsanordnung nach einem der Ansprüche 7 bis 11, **dadurch gekennzeichnet, dass** das Schaltnetzteil (6) für den Betrieb mit einer Wechselspannung zwischen 100 Volt und 265 Volt ausgelegt ist.

## Claims

1. Method for monitoring an electrical component (1), wherein the electrical component (1) comprises an error detection device (2) and is operated by means of a switch-mode power supply (6) fed by way of supply lines (4), **characterised in that** during correct operation of the electrical component (1) a rectifier element (7) arranged in one of the supply lines (4) is bridged by means of a switch S actuated by the error detection device (2), and that in the event of an error or malfunction, the function of the rectifier element (7) is identified by a detection device (8) arranged in the supply line (4).

2. Method according to claim 1, **characterised in that** the electrical component (1) is a signal device within a railway network and is monitored.

3. Method according to one of claims 1 or 2, **characterised in that** a diode is provided as a rectifier element (7).

4. Method according to one of claims 1 to 3, **characterised in that** an evaluation of current half waves in the supply line is carried out by means of the detection device (8), which is arranged in a central signal box system (9).

5. Method according to one of claims 1 to 4, **characterised in that** an output voltage generated by the switch-mode power supply, by means of which the electrical component (1) is operated, is regulated.

6. Method according to one of claims 1 to 5, **characterised in that** the switch-mode power supply (6) is fed with an alternating voltage between 100 volts and 265 volts.

7. Circuit arrangement for carrying out the method according to one of claims 1 to 6, comprising:
- an electrical component (1) to be monitored with an error detection device (2),
- a switch-mode power supply (6) for operating the electrical component (1) with supply lines (4) leading into the switch-mode power supply (6) for introducing electrical energy into the switch-mode power supply (6),
**characterised in that** the circuit arrangement further comprises:
- a rectifier element (7) arranged in one of the supply lines (4), which, during normal operation of the electrical component (1), is bridged by means of a switch actuated by the error detection device (2),
- a detection device (8) arranged in the supply line (4), for identifying the function of the rectifier element (7) in the event of an error in the electrical component (1).

8. Circuit arrangement according to claim 7, **characterised in that** the electrical component (1) is a signal device within a railway network.

9. Circuit arrangement according to one of claims 7 or 8, **characterised in that** a diode is provided as a rectifier element (7) .

10. Circuit arrangement according to one of claims 7 to 9, **characterised in that** the detection device (8) is arranged in a central signal box system (9) of a railway network.

11. Circuit arrangement according to one of claims 7 to 10, **characterised in that** the switch-mode power supply (6) has a regulatable output voltage.

12. Circuit arrangement according to one of claims 7 to 11, **characterised in that** the switch-mode power supply (6) is configured for operation with an alternating voltage between 100 volts and 265 volts.

## Revendications

1. Procédé de surveillance d'un composant électrique (1), le composant électrique (1) comprenant un dispositif de message d'erreur (2) et fonctionnant à l'aide d'un bloc d'alimentation (6) alimenté par des lignes d'alimentation (4), **caractérisé en ce qu'**un élément redresseur (7) disposé dans une des lignes d'alimentation (4) est ponté pendant le fonctionnement régulier du composant électrique (1) au moyen d'un commutateur S actionné par le dispositif de message d'erreur (2) et **en ce que**, en cas d'erreur ou de panne, la fonction de l'élément redresseur (7) est reconnue par un dispositif de détection (8) disposé dans la ligne d'alimentation (4).

2. Procédé selon la revendication 1, **caractérisé en ce que** le composant électrique (1) est un dispositif de signalisation au sein d'un réseau ferroviaire et est surveillé.

3. Procédé selon l'une des revendications 1 ou 2, **caractérisé en ce qu'**une diode est prévue en guise d'élément redresseur (7).

4. Procédé selon l'une des revendications 1 à 3, **caractérisé en ce qu'**une évaluation des demi-ondes de courant dans la ligne d'alimentation est effectuée au moyen du dispositif de détection (8), lequel est disposé dans une installation d'enclenchement (9) centrale.

5. Procédé selon l'une des revendications 1 à 4, **caractérisé en ce qu'**une tension de sortie produite par le bloc d'alimentation (6), laquelle fait fonctionner le composant électrique (1), est régulée.

6. Procédé selon l'une des revendications 1 à 5, **caractérisé en ce que** le bloc d'alimentation (6) est alimenté par une tension alternative entre 100 volts et 265 volts.

7. Agencement de circuits pour l'exécution du procédé selon l'une des revendications 1 à 6, comprenant:
- un composant électrique (1) à surveiller avec un dispositif de message d'erreur (2),
- un bloc d'alimentation secteur (6) destiné au fonctionnement du composant électrique (1) avec des lignes d'alimentation (4) débouchant dans le bloc d'alimentation (6) pour l'apport d'énergie électrique dans le bloc d'alimentation (6),
**caractérisé en ce que** l'agencement de circuits comprend en outre:
- un élément redresseur (7) disposé dans une des lignes d'alimentation (4), lequel est ponté pendant le fonctionnement régulier du composant électrique (1) au moyen d'un commutateur actionné par le dispositif de message d'erreur (2),
- un dispositif de détection (8) disposé dans la ligne d'alimentation (4), destiné à la reconnaissance de la fonction de l'élément redresseur (7) en cas d'erreur du composant électrique (1).

8. Agencement de circuits selon la revendication 7, **caractérisé en ce que** le composant électrique (1) est un dispositif de signalisation au sein d'un réseau ferroviaire.

9. Agencement de circuits selon l'une des revendications 7 ou 8, **caractérisé en ce qu'**une diode est prévue en guise d'élément redresseur (7).

10. Agencement de circuits selon l'une des revendications 7 à 9, **caractérisé en ce que** le dispositif de détection (8) est disposé dans l'installation d'enclenchement (9) centrale d'un réseau ferroviaire.

11. Agencement de circuits selon l'une des revendications 7 à 10, **caractérisé en ce que** le bloc d'alimentation (6) dispose d'une tension de sortie réglable.

12. Agencement de circuits selon l'une des revendications 7 à 11, **caractérisé en ce que** le bloc d'alimentation (6) est réalisé pour fonctionner à une tension alternative située entre 100 volts et 265 volts.
